# DEMANDE DE BREVET EUROPEEN

(11) **EP 1 375 778 A1**
(43) Date de publication de la demande: **02.01.2004**
(21) Numéro de dépôt: 02291561.5
(22) Date de dépôt: 21.06.2002
(51) Int. Cl.: E04F 15/02, E04F 15/12, E04G 23/02

(54) **Nouveau matériau isolant à base de caoutchouc usagé et ses utilisations**

(71) Demandeur: Polynauve S.A.R.L., 94667 Orly Cedex (FR)
(72) Inventeur: Garderes, Philippe, 64290 Gan (FR)
(74) Mandataire: Burtin, Jean-François

(57) **Abrégé**

L'invention s'adresse au domaine des matériaux de construction et de rénovation.

Elle a spécifiquement pour objet un kit de réalisation d'une chape légère destinée à rattraper les irrégularités d'un sol ou d'un plancher caractérisée en ce qu'elle est constituée de caoutchouc usagé, vulcanisé ou non liée ou non par une résine liquide et le cas échéant d'autres matériaux de manière à réaliser après mélange une masse élastique, insonorisante et isolante.

L'invention a encore pour objet un procédé d'obtention de la chape légère destinée à rattraper les irrégularités d'un sol ou d'un plancher.

Utilisation à la rénovation des planchers ou comme sous-couche de jointement.

## Description

La présente invention s'adresse d'une manière générale au domaine des matériaux de construction et de rénovation. Elle s'adresse plus particulièrement à celui de l'isolation et de la correction des sols.

Elle a en particulier pour objet un matériau isolant destiné à garnir ou à revêtir les chapes, les dalles, les solives, les vieux planchers ou tout autre type de surface dans le but de former une sous-couche de préparation souple et isolante.

Elle a spécifiquement pour objet un kit de réalisation d'une chape légère destinée à rattraper les irrégularités d'un sol ou d'un plancher, caractérisé en ce qu'elle est constituée de caoutchouc usagé, vulcanisé ou non, lié ou non par une résine liquide et le cas échéant d'autres matériaux, de manière à réaliser après mélange une masse élastique, insonorisante et isolante.

La masse peut être rendue davantage fluide en ajoutant une quantité plus ou moins grande de résine liante de telle sorte que l'on peut parvenir à mélanger les ingrédients dans une bétonnière avant emploi. Le mélange reste fluide et on peut le couler sur la surface à revêtir.

Commodément, le mélange selon l'invention, est préparé en deux emballages différents : le caoutchouc sous forme de granulats, fibrettes, poudrettes ou autres, séparément et la résine liante en quantité déterminée dans un autre emballage.

En conséquence la composition selon l'invention, pourra se présenter soit sous forme d'un kit avec les constituants disposés isolement, soit sous la forme d'un mélange prêt à être appliqué ou coulé au moment de l'emploi ou soit encore sous forme de vrac.

Le caoutchouc peut provenir pour partie de caoutchouc usagé comme des broyats de pneumatiques ou de tout type de pièces en caoutchouc pour l'automobile ou l'industrie, préalablement triés pour éliminer les éléments métalliques et notamment le treillis de carcasse et autres éléments textiles, puis déchiquetés sous différentes formes : granulats de différents calibres, fibrettes, poudrettes,...

L'objet de l'invention est également l'utilisation du mélange précité présenté soit en deux fractions distinctes, soit sous forme d'homogénéisat ou soit sous forme de vrac aux fins de pose d'un parquet de rénovation.

On sait en effet que le parquet est soit massif, c'est-à-dire fait de longues planches de bois de chêne, de châtaignier, de sapin, d'épicéa, de pin maritime ou de bois de peuplier, soit mosaïque c'est-à-dire fait de petites lattes de bois disposées selon des motifs géométriques, soit contrecollé à parement en bois feuillus durs, soit sous la forme de revêtement de sols stratifiés.

Ces différents types de planchers subissent une usure au cours du temps principalement en raison des charges qu'ils supportent ou en raison de l'état de conservation des solives qui soutiennent ces lattes ou même en raison de l'impact de talons, comme ceux de chaussures de dame.

Les lattes de plancher peuvent finir par se disjoindre ou bien les angles d'assemblage du bois bouveté peuvent éclater, souvent en raison de la présence d'un noeud dans le bois. Ceci contribue à rendre les planchers plus fragiles et à laisser au fil du temps les planchers "travailler" pour finalement présenter des rainures ou des fentes importantes. On peut même aboutir à la dissociation d'une latte laissant un vide béant entre deux lattes. De même les solives et les lambourdes peuvent au fil du temps et en raison de passages intensifs ou sous l'effet de l'humidité, se décaler ou se casser, créant des fléchissements aux graves répercussions pour le plancher. A l'identique, les planchers flottants et autres revêtements stratifiés sont fragiles, ils sont collés sur la chape de béton et conduisent souvent après un certain temps, à des décollements de latte ou à un écumage des extrémités de lame.

Il est donc souvent nécessaire de procéder à la rénovation des planchers endommagés et notamment des vieux planchers qui se sont disjoints ou affaissés au fil des années. Le matériau à envisager pour leur rénovation doit pouvoir permettre de rattraper un niveau égal dans toute une pièce, il doit être léger pour ne pas surcharger les solives et doit être suffisamment plastique pour s'étaler facilement. En outre, il doit être facile d'utilisation, ne pas sécher dans un récipient et permettre d'aplanir le support pour réaliser la pose d'un parquet flottant.

On connaissait déjà des produits de rénovation de vieux planchers à base de mastic ou de résine.

Le mélange composite selon l'invention, s'en différencie par le fait qu'il est léger, facile à poser et qu'il permet d'aplanir le support tout en restant élastique. On peut ainsi poser un nouveau plancher aux emplacements où le parquet ancien présentait des dénivellations ou des manques. Le mélange composite selon l'invention, assure une bonne isolation phonique et thermique. En outre, il est facile à mettre en place et le produit s'applique comme une chape de béton que l'on tire à la règle.

Selon une modalité particulière de l'invention, le caoutchouc usagé qui sert de matière première est un produit de récupération de pneus, déchiqueté en petits fragments, de quelques millimètres. Il s'incorpore facilement à la résine de liaison.

La résine de liaison est de préférence une résine du type acrylique ou un polyuréthane.

Les rapports de mélange peuvent varier dans des proportions importantes. La teneur en résine s'échelonne de 10 à 25 % rapporté à la totalité du mélange.

Commodément le kit selon l'invention, est constitué par un sac pesant environ 25 Kg, contenant les granules de mélange à base de caoutchouc et par un bidon pré-dosé dans un emballage séparé contenant la résine. On mélange les deux constituants au moment de l'emploi.

Le granulat de caoutchouc provient de pneus usagés préalablement triés pour éliminer les éléments métalliques et notamment les treillis de carcasse, puis déchiquetés en petits cubes ou petits morceaux. On peut y incorporer d'autres déchets de caoutchouc usagé comme par exemple des fragments de pièces automobiles en caoutchouc ou autres déchets en caoutchouc vulcanisé ou encore d'autres matériaux issus du recyclage. Le caoutchouc usagé peut être additionné d'autres déchets.

La résine est un liquide peu épais qui facilite le mélange des granulés de caoutchouc. Le mélange peut être en outre facilité par dilution par un solvant inerte ou mélangé à des poudres inertes qui ont pour objet de la rendre plus fluide ou au contraire plus épaisse. De cette façon le mélange des deux poudres pourra s'effectuer avec facilité et en outre les qualités physiques et/ou mécaniques seront améliorées.

L'invention concerne également des compositions qui contiennent seulement du caoutchouc recyclé additionné ou non de produits de charge et de produits inertes issus du recyclage. Ces produits peuvent également s'adresser à d'autres types d'application notamment comme sous-couche de jointoiement pour dalles de béton.

L'invention concerne encore l'utilisation des compositions selon l'invention comme support pour d'autres types de revêtement de surface que des planchers comme par exemples des revêtements en matériau synthétique (chlorure de vinyle ou polyéthylène) ou de carrelages.

Les compositions selon l'invention permettent de réparer ou de rénover des revêtements de sols fissurés ou endommagés sans avoir à refaire l'intégralité du revêtement.

L'invention concerne encore un procédé d'obtention d'un matériau isolant destiné à l'isolation et à la correction des sols caractérisé en ce qu'on additionne du caoutchouc usagé provenant de pneus d'autres déchets de caoutchouc usagé et/ou d'autres matières diverses, puis d'une résine du type acrylique ou de polyuréthane et homogénéise la masse pour être prête à l'emploi.

## Revendications

1. Matériau isolant destiné à garnir ou à revêtir les chapes, les dalles, les solives, les vieux planchers ou tout autre type de surface **caractérisé en ce qu'**il est constitué de caoutchouc usagé, vulcanisé ou non, lié ou non par une résine liquide et le cas échéant de matériaux de charge ou d'adjuvants.

2. Matériau isolant selon la revendication 1, **caractérisé en ce qu'**il est présenté sous forme de kit avec les constituants disposés isolément.

3. Matériau isolant selon la revendication 1, **caractérisé en ce qu'**il est présenté sous la forme d'un mélange prêt à être appliqué ou coulé au moment de l'emploi.

4. Matériau isolant selon la revendication 1. **caractérisé en ce qu'**il est présenté sous forme de vrac.

5. Matériau selon l'une des revendications 1 à 4, **caractérisé en ce que** le caoutchouc usagé provient de broyats de pneumatiques ou de tout type de pièces en caoutchouc pour l'automobile et l'industrie.

6. Matériau isolant selon la revendication 5, **caractérisé en ce que** le caoutchouc usagé est préalablement trié puis déchiqueté sous différentes formes comme par exemple granulats de différents calibres, fibrettes, poudrettes.

7. Matériau isolant selon l'une des revendications précédentes dans lequel la résine de liaison est une résine de type acrylique ou un polyuréthane.

8. Matériau isolant selon l'une des revendications précédentes dans lequel la teneur en résine s'échelonne de 10 à 25 % rapporté à la totalité du mélange.

9. Matériau isolant selon l'une des revendications précédentes dans lequel le caoutchouc usagé peut être additionné d'autres déchets ainsi que de matières diverses.

10. Matériau de jointoiement **caractérisé en ce qu'**il est constitué de caoutchouc recyclé additionné ou non de produits de charge et de produits inertes issus du recyclage.

11. Procédé d'obtention d'un matériau isolant destiné à l'isolation et à la correction des sols **caractérisé en ce qu'**on additionne du caoutchouc usagé provenant de pneus, d'autres déchets de caoutchouc usagé et de matières diverses puis d'une résine de liaison du type acrylique ou de polyuréthane et homogénéise la masse pour être prête à l'emploi.

12. Utilisation du matériau isolant selon la revendication 1, pour le garnissage ou le revêtement des chapes, des dalles, des solives, des vieux planchers pour former une sous-couche de préparation souple et isolante.

13. Utilisation du matériau isolant selon la revendication 1, comme support pour des revêtements de surface en matériau synthétique ou de carrelage.

14. Utilisation du matériau selon la revendication 10, comme sous-couche de jointoiement pour dalles de béton.
